# FASCICULE DE BREVET EUROPEEN

(11) **EP 0 451 015 B1**
(45) Date de publication et mention de la délivrance du brevet: **01.06.1994**
(21) Numéro de dépôt: 91400797.6
(22) Date de dépôt: 25.03.1991
(51) Int. Cl.: G21C 17/00, G21C 1/09

(54) **Plancher amovible pour intervention à l'intérieur d'une enveloppe telle qu'un pressuriseur de réacteur nucléaire à eau sous pression**
Entfernbares Gerüst für das Einschreiten innerhalb einer Hülle, wie ein Druckausgleichgefäss eines Druckwasserkernreaktors
Removable platform for interventions inside a shell, such as a pressurizer of a PWR

(30) Priorité: 02.04.1990 FR 9004190
(43) Date de publication de la demande: 09.10.1991
(73) Titulaire: FRAMATOME, 92400 Courbevoie (FR)
(72) Inventeur: Batistoni, Michel, F-71640 Dracy le Fort (FR)
(74) Mandataire: Bouget, Lucien

(56) Documents cités:
- FR-A- 2 395 461
- FR-A- 2 444 996
- US-A- 4 801 422
- US-A- 4 842 807

## Description

L'invention concerne un plancher amovible pour intervention à l'intérieur d'une enveloppe (voir FR-A-2 395 461 concernant un plancher amovible pour intervention à l'intérieur d'une enveloppe de générateur de vapeur de réacteur nucléaire à eau sous pression), telle que l'enveloppe d'un pressuriseur de réacteur nucléaire à eau sous pression.

Les réacteurs nucléaires à eau sous pression comportent un circuit primaire dans lequel l'eau de refroidissement du réacteur est maintenue à une forte pression de l'ordre de 155 bars, grâce à un pressuriseur disposé sur l'une des branches du circuit primaire.

Le pressuriseur permet de maintenir la pression dans le circuit primaire entre certaines limites déterminées, soit par aspersion lorsque la pression a tendance à dépasser la limite supérieure admise, soit par chauffage électrique du fluide primaire, lorsque la pression a tendance à descendre en dessous de la valeur inférieure admise. Ces opérations sont effectuées à l'intérieur du pressuriseur qui comporte en particulier une enveloppe de forme générale cylindrique disposée avec son axe vertical et fermée à sa partie inférieure et à sa partie supérieure par des fonds bombés.

Le fond bombé inférieur est traversé par des manchettes dans lesquelles sont introduites des cannes de chauffage électriques pénétrant à l'intérieur du pressuriseur.

Le fond bombé supérieur est traversé en particulier par un piquage de raccordement de la tuyauterie d'aspersion du pressuriseur, par des piquages de traversée de dispositifs d'instrumentation et par au moins une ouverture de visite obturable par un moyen de fermeture étanche.

L'enveloppe du pressuriseur des réacteurs nucléaires construits actuellement présente un diamètre de l'ordre de 2,40 m et une hauteur de l'ordre de 13 m.

Lors des arrêts du réacteur nucléaire pour rechargement et entretien du réacteur, on effectue diverses opérations de contrôle et de réparation sur le pressuriseur.

En particulier, on effectue le contrôle des cannes chauffantes et le remplacement des cannes défectueuses pénétrant dans le pressuriseur par son fond inférieur. Ces opérations peuvent être réalisées depuis l'extérieur du pressuriseur et en utilisant des dispositifs au moins partiellement automatisés.

Les opérateurs interviennent dans une zone voisine de la paroi extérieure de l'enveloppe du pressuriseur et pendant une période de temps relativement courte. En conséquence, ces opérateurs sont soumis à des doses d'irradiation faibles.

En revanche, dans le cas d'interventions dans la partie supérieure du pressuriseur, par exemple pour réparer ou remplacer divers éléments tels que les piquages d'instrumentation, il est nécessaire de faire pénétrer des opérateurs à l'intérieur de l'enveloppe du pressuriseur, c'est-à-dire dans une zone fortement activée ; en effet, le fluide primaire du réacteur vient en contact avec la surface intérieure de l'enveloppe du pressuriseur pendant le fonctionnement du réacteur, si bien que cette paroi est fortement activée. En outre, les opérations d'entretien ou de réparation qui doivent être effectuées dans la partie supérieure du pressuriseur nécessitent la mise en place de planchers ou plateformes de travail à l'intérieur du pressuriseur, étant donné la hauteur importante de l'enveloppe. Ces planchers ou plateformes reposent sur la partie supérieure d'échafaudages qui prennent appui sur le fond et sur la paroi latérale du pressuriseur.

Les échafaudages nécessaires pour travailler dans la partie supérieure de l'enveloppe du pressuriseur présentent une hauteur d'environ 10 m et sont constitués par des pièces élémentaires assemblables entre elles, par exemple par encliquetage.

Le montage de tels échafaudages de grande hauteur à l'intérieur de l'enveloppe du pressuriseur est une opération difficile et délicate à mettre en oeuvre et qui nécessite une durée d'exécution relativement longue.

Les opérateurs qui doivent intervenir dans une zone très contaminée où le rayonnement est important sont susceptibles de recevoir de fortes doses d'irradiation. Dans certains cas, le rayonnement dans certaines parties du pressuriseur peut être trop important pour qu'on puisse envisager d'effectuer une opération de montage d'une plateforme d'intervention.

En outre, dans la mesure où les échafaudages sont constitués par des pièces détachées encliquetables entre elles, certaines de ces pièces peuvent tomber accidentellement au fond du pressuriseur lors du montage et détériorer les parties d'extrémité des cannes chauffantes en saillie à l'intérieur de l'enveloppe du pressuriseur.

Le but de l'invention est donc de proposer un plancher amovible pour intervention à l'intérieur d'une enveloppe telle que l'enveloppe d'un pressuriseur d'un réacteur nucléaire à eau sous pression, de forme générale cylindrique, disposée avec son axe vertical et fermée, à son extrémité supérieure, par un fond bombé traversé par au moins une ouverture de visite, le plancher d'intervention pouvant être mis en place dans l'enveloppe et démonté et extrait par des opérations effectuées depuis l'extérieur de l'enveloppe, de manière à éviter la présence, pendant une période de temps prolongée, d'opérateurs à l'intérieur de l'enveloppe et la chute d'éléments constitutifs du plancher dans la partie inférieure de l'enveloppe, pendant le montage ou le démontage de ce plancher amovible.

Dans ce but, le plancher amovible suivant l'invention comporte :
- une goulotte comportant un ensemble de manutention et de fixation à l'une de ses extrémités constitué par un élément d'accrochage à un moyen de levage, une virole cylindrique et une bride, pour son engagement dans l'ouverture de visite de l'enveloppe et sa fixation par vissage de la bride sur une partie externe de l'enveloppe ainsi qu'une partie de support en forme de portion de cylindre ouverte latéralement et prolongeant la virole dans sa direction axiale,
- un arbre de support monté articulé à l'extrémité de la goulotte opposée à son extrémité comportant l'ensemble de manutention et de fixation, cette extrémité se trouvant au voisinage de l'axe de l'enveloppe, lorsque la goulotte est mise en place dans l'enveloppe, l'axe d'articulation de l'arbre de support étant alors dans une position horizontale, de manière que cet arbre puisse pivoter entre une position de repli sensiblement perpendiculaire à la direction longitudinale de la goulotte et une position de service où l'arbre est sensiblement coaxial à l'enveloppe,
- un ensemble de bras supports montés sur l'arbre de support de manière pivotante entre une position de repli où les bras supports sont sensiblement parallèles les uns par rapport aux autres et accolés, les bras pouvant alors être placés et maintenus dans la goulotte suivant sa direction axiale, l'arbre de support étant dans sa position de repli, et une position déployée dans laquelle les bras peuvent être placés par pivotement autour de l'axe de l'arbre support en position verticale, dans des dispositions angulaires réparties de manière sensiblement régulière autour de l'axe de l'enveloppe,
- et une pluralité d'éléments plans destinés à reposer sur les bras supports en position déployée pour constituer un plancher de travail sensiblement dans toute la section droite de l'enveloppe.

Afin de bien faire comprendre l'invention, on va maintenant décrire, à titre d'exemple non limitatif, en se reportant aux figures jointes en annexe, un mode de réalisation d'un plancher amovible suivant l'invention utilisé pour effectuer des interventions dans la partie supérieure d'un pressuriseur de réacteur nucléaire à eau sous pression.

La figure 1 est une vue en perspective avec arrachement d'un pressuriseur d'un réacteur nucléaire à eau sous pression.

La figure 2 est une vue en coupe par un plan vertical de la partie supérieure du pressuriseur représenté sur la figure 1, dans lequel a été mis en place un plancher amovible suivant l'invention.

La figure 2A est une vue en élévation latérale de l'un des bras de support du plancher amovible représenté sur la figure 2.

La figure 2B est une vue en élévation latérale d'un bras support différent du bras représenté sur la figure 2A dans sa position d'engagement sur l'arbre de support.

La figure 3 est une vue de dessus suivant 3-3 de la figure 2, du plancher amovible mis en place à l'intérieur de l'enveloppe du pressuriseur.

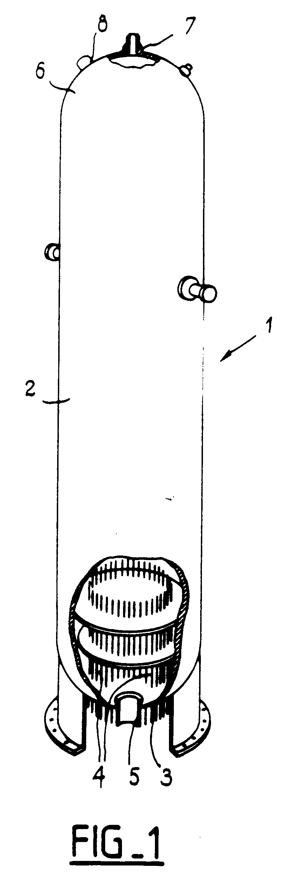

Sur la figure 1, on voit un pressuriseur d'un réacteur nucléaire à eau sous pression désigné de manière générale par le repère 1.

Le pressuriseur 1 comporte une enveloppe 2 de forme cylindrique disposée avec son axe vertical dans la position de service du pressuriseur.

L'enveloppe 2 comporte, au voisinage de son extrémité inférieure, un premier fond bombé 3 traversé par un grand nombre de manchettes dans chacune desquelles est engagée une canne chauffante 4.

Les cannes chauffantes sont placées dans une disposition verticale dans la partie inférieure de l'enveloppe 2 du pressuriseur dans laquelle elles sont en saillie.

Un piquage 5 traversant le fond 3 permet de mettre en communication le volume intérieur du pressuriseur avec le circuit primaire du réacteur, par l'intermédiaire d'un conduit de grande section.

L'enveloppe 2 du pressuriseur est fermée à sa partie supérieure par un fond bombé 6 qui est traversé, à la partie centrale, par un piquage 7 auquel est raccordée la tuyauterie d'aspersion du pressuriseur.

D'autres piquages sont également prévus sur le fond bombé supérieur 6, pour le passage de dispositifs d'instrumentation à l'intérieur de l'enveloppe du pressuriseur.

Le fond bombé 6 est également traversé par une ouverture de visite 8 ou trou d'homme qui est fermée de manière étanche, pendant le fonctionnement du pressuriseur.

Lorsque le pressuriseur est dans une phase de fonctionnement normal, la partie inférieure de son enveloppe, au-dessus du fond 3, dans laquelle sont disposées les cannes chauffantes 4 contient de l'eau sous pression. La partie supérieure du volume intérieur de l'enveloppe 2 dans laquelle débouche le piquage 7 de la tubulure d'aspersion renferme de la vapeur en équilibre de pression avec l'eau contenue dans la partie inférieure de l'enveloppe.

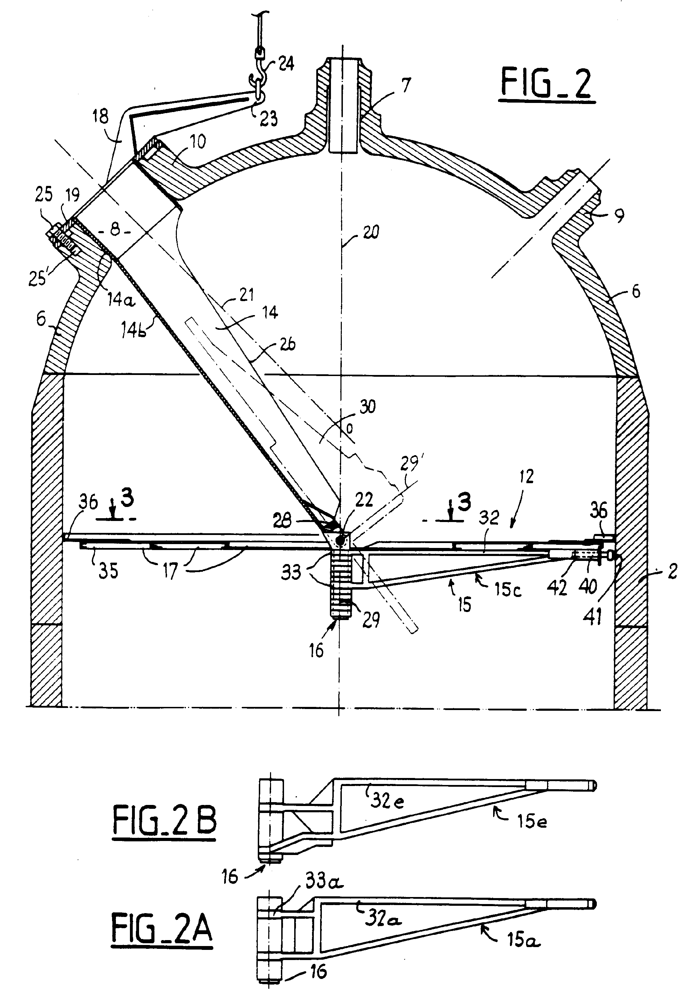

Sur la figure 2, on voit la partie supérieure de l'enveloppe 2 du pressuriseur fermée par le fond bombé 6 qui est traversé par le piquage 7 de la tubulure d'aspersion et par le trou d'homme 8. Le fond bombé supérieur 6 peut être traversé par des piquages d'instrumentation tels que le piquage 9.

Le trou d'homme 8 est ménagé dans l'alésage intérieur d'une tubulure 10 formée dans la paroi du fond bombé 6.

La tape de fermeture étanche du trou d'homme 8 est fixée sur l'extrémité externe de la tubulure 10, pour assurer la fermeture étanche du pressuriseur, pendant son fonctionnement.

La tubulure 10 et le trou d'homme sont également utilisés pour réaliser la mise en place et la fixation du plancher amovible suivant l'invention, pendant les périodes d'arrêt du réacteur nucléaire, le pressuriseur ayant été préalablement vidangé et refroidi.

Le plancher amovible suivant l'invention désigné de manière générale par le repère 12 est constitué par une goulotte 14 assurant la manutention et la fixation du plancher pour sa mise en place dans l'enveloppe du pressuriseur, un arbre de support 16 monté articulé à l'une des extrémités de la goulotte 14, un ensemble de bras supports tels que le bras 15 monté pivotant sur l'arbre 16, et une pluralité d'éléments plans 17 destinés à constituer un plancher de travail, sensiblement dans toute la section droite de l'enveloppe cylindrique 2 du pressuriseur.

La goulotte 14 comporte, à l'une de ses extrémités, un ensemble de manutention et de fixation comportant la partie d'extrémité 14a de la goulotte ayant la forme d'une virole cylindrique, une bride 19 solidaire de la virole 14a à son extrémité et un élément d'accrochage 18 de forme coudée fixé sur la bride 19.

La goulotte comporte une partie de support 14b fixée à l'extrémité de la virole 14a opposée à la bride 19 et dans le prolongement de cette virole.

Lorsque la goulotte 14 est introduite dans le trou d'homme 8, comme représenté sur la figure 2, la virole 14a dont le diamètre est très légèrement inférieur au diamètre de l'alésage de la tubulure 10 constituant le trou d'homme 8 vient se placer dans une position coaxiale par rapport au trou d'homme.

L'axe 21 du trou d'homme est dirigé suivant un rayon du fond bombé sphérique et coupe l'axe vertical 20 de symétrie de l'enveloppe du pressuriseur en un point O qui constitue le centre géométrique du fond bombé sphérique.

La partie de support 14b de la goulotte fait un certain angle avec l'axe 21 du trou d'homme et de la virole 14a et son extrémité opposée à sa partie de manutention et de fixation sur laquelle est articulé l'arbre de support 16 se trouve au voisinage de l'axe 20 de l'enveloppe du pressuriseur, en-dessous du centre O du fond bombé, lorsque la goulotte est mise en place dans le pressuriseur, comme représenté sur la figure 2.

L'axe d'articulation horizontal 22 de l'arbre support 16 sur l'extrémité de la goulotte 14 est concourant avec l'axe 20 de l'enveloppe du pressuriseur.

L'élément d'accrochage 18 de la goulotte est réalisé sous forme coudée et nervurée et comporte, à son extrémité opposée à la bride 19 sur laquelle il est fixé, une ouverture d'accrochage 23 dans laquelle peut être engagé le crochet 24 d'un moyen de manutention et de levage assurant la mise en place de la goulotte 14 et de la structure du plancher d'appui, à l'intérieur de l'enveloppe du pressuriseur.

Le moyen de manutention et de levage du plancher amovible peut être constitué par exemple par le pont polaire du réacteur nucléaire ou par un palan auxiliaire implanté dans la casemate du pressuriseur.

La bride 19 comporte des ouvertures qui sont mises en coincidence avec les trous taraudés tels que le trou 25′ usiné dans la tubulure 10 délimitant le trou d'homme 8.

Les vis de fixation telles que la vis 25 sont engagées dans les ouvertures de la bride 19 et dans les trous taraudés 25′ correspondants pour assurer le serrage de la bride 19 contre l'extrémité extérieure de la tubulure 10.

La bride 19 et la tubulure 10 comportent généralement trois ouvertures disposées à 120° les unes par rapport aux autres autour de l'axe 21 commun à la tubulure 10 et à la virole 14a.

La partie de support 14b de la goulotte 14 est constituée par une portion de cylindre comportant une ouverture latérale de direction longitudinale délimitée par des rebords constitués par une découpe 26 légèrement inclinée par rapport à la direction longitudinale de la goulotte.

La partie 14b de la goulotte porte, à son extrémité opposée à la virole de mise en place et de fixation 14a, un palier 28 dans lequel l'axe d'articulation 22 de l'arbre de support 16 est monté rotatif.

Comme indiqué plus haut, la position du palier 28 à l'extrémité de la goulotte 14 est telle que lorsque la goulotte 14 est en place dans le pressuriseur, l'axe d'articulation 22 est concourant avec l'axe de symétrie 20 de l'enveloppe du pressuriseur.

L'arbre de support 16 est monté pivotant par l'intermédiaire de l'axe 22 dans le palier 28 solidaire de la goulotte 14, de manière à pouvoir se déplacer entre une position de service du plancher amovible représenté sur la figure 2 où l'axe 29 de l'arbre de support 16 est confondu avec l'axe 20 de l'enveloppe et une position de repli où l'axe 29 de l'arbre support 16 est dans une position 29′ sensiblement perpendiculaire à la direction longitudinale de la goulotte 14.

L'arbre de support 16 porte un ensemble de bras supports 15 qui sont montés pivotants sur l'arbre 16, autour de l'axe géométrique 29.

Chacun des bras supports 15, ainsi qu'il sera décrit plus en détail dans la suite de la description, est mobile entre une position de repli et une position déployée permettant la mise en place d'un plancher de travail dans une section droite de l'enveloppe du pressuriseur.

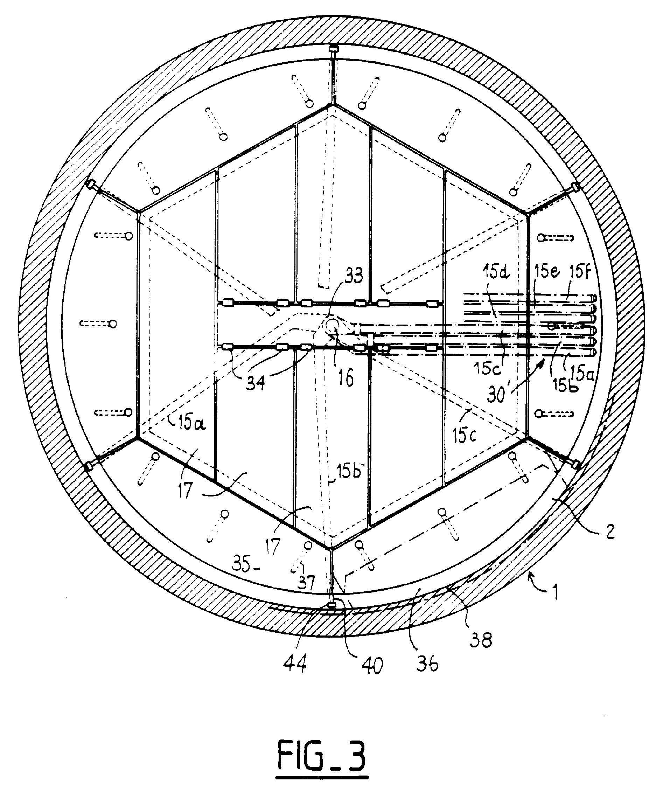

Sur la figure 3 on a représenté en traits mixtes les bras supports 15 dans leur position de repli.

Le plancher amovible comporte une structure de support constituée par six bras 15a, 15b, 15c, 15d, 15e, 15f montés pivotants sur l'arbre de support 16.

Dans leur position de repli, les bras 15a à 15f sont sensiblement parallèles entre eux et accolés pour constituer un ensemble compact qui peut être déplacé dans son ensemble, entre une position de transport et de manutention 30 représentée en traits mixtes sur la figure 2, l'axe de l'arbre de support 16 étant alors dans sa position 29′, et une position de mise en service 30′ représentée sur la figure 3, l'axe 29 de l'arbre de support 16 étant alors confondu avec l'axe 20 de l'enveloppe du pressuriseur et les bras 15a à 15f étant sensiblement horizontaux.

On assure le déplacement de l'ensemble des bras supports 15 entre leur position de manutention et de transport et leur position de mise en service, grâce à un dispositif de traction et de poussée tel qu'un câble à billes de type Téléflex relié à une pignonerie appropriée montée sur l'arbre de support 16, soit par une perche de manoeuvre qui peut être reliée à l'ensemble des bras 15.

Comme il est visible sur les figures 2, 2A, 2B et 3, les bras 15 sont constitués par des structures entretoisées de forme générale triangulaire présentant une barre d'appui supérieure 32 sensiblement horizontale sur laquelle viennent reposer les éléments plans 17 constituant le plancher de travail.

Chacun des bras comporte deux paliers 33 permettant son montage articulé et stable sur l'arbre de support 16.

Les bras 15 sont tous différents en ce qui concerne leur forme et la position en hauteur des paliers 33 permettant leur montage pivotant sur l'arbre de support 16.

Comme il est visible sur la figure 3, la partie de liaison entre les paliers 33 et la partie rectiligne du bras support comportant la barre d'appui 32 présente une forme coudée, les parties de liaison des différents bras 15 présentant des formes différentes. De cette manière, les six bras 15a, 15b, ... 15f peuvent être montés pivotants sur l'arbre de support 16, de manière que leurs paliers 33 soient placés dans des positions adjacentes et successives, dans la direction axiale 29 de l'arbre de support 16.

Lorsque les bras 15 sont montés sur l'arbre de support 16, leurs barres d'appui 32 se trouvent toutes à un même niveau, bien que les bras supports soient articulés à différentes hauteurs sur l'arbre support 16. Ce résultat est obtenu grâce aux formes différentes des bras 15, comme il est visible sur les figures 2, 2A et 2B.

Sur la figure 2, on voit en particulier la forme du bras support 15c dont les paliers sont disposés au niveau le plus haut sur l'arbre support 16.

Sur la figure 2A, on a représenté l'arbre 15a dont les paliers se trouvent au deuxième niveau en-dessous de l'arbre 15c. Enfin, sur la figure 2B, on a représenté l'arbre 15e dont les paliers 33e se trouvent au quatrième niveau en-dessous des paliers 33c de l'arbre 15c situé le plus haut.

Comme il est visible sur la figure 3, les parties coudées de liaison entre les paliers 33 et les parties rectilignes des bras 15 viennent se placer les unes au-dessus des autres dans la position repliée des bras, de manière que les parties rectilignes des bras et en particulier les barres d'appui 32 se trouvent dans une disposition parallèle et accolées.

Sur la figure 3, on a également représenté les bras 15 dans une position déployée, en-dessous du plancher de travail constitué par les éléments plans 17, leurs parties rectilignes étant placées dans des directions radiales par rapport à une section droite de l'enveloppe 2 du pressuriseur 1 faisant entre elles des angles de 60°.

Cette disposition déployée des bras 15 est obtenue à partir de la position de mise en service de ces bras représentée en traits mixtes sur la figure 3, l'axe 29 de l'arbre de support 16 étant vertical et confondu avec l'axe 20 du pressuriseur.

Cette position est obtenue en faisant tourner chacun des bras 15 d'un angle voulu autour de l'axe 29 du bras support 16. La position déployée du bras 15c est obtenue par une rotation de 30° environ, la position déployée du bras 15b par une rotation d'à peu près 90° et la position du bras 15c par une rotation d'à peu près 120°.

Les positions déployées des bras 15d, 15e et 15f sont obtenues par des rotations de ces bras d'environ 30, 90 et 120°, dans un sens de pivotement, inverse du sens de pivotement des bras 15a, 15b et 15c.

Lorsque les bras 15 sont dans leur position déployée, la structure de support constituée par ces bras est prête à recevoir le plancher de travail constitué par des éléments plans 17 juxtaposés et reliés par des éléments de liaison 34.

La mise en position déployée des bras 15 peut être commandée à distance, depuis l'extérieur de l'enveloppe du pressuriseur, par exemple en utilisant une commande du type Téléflex ou en utilisant une perche de manoeuvre.

Les éléments plans 17 constituant le plancher de travail peuvent être ensuite posés et assemblés sur les barres d'appui 32 des bras 15, par un opérateur travaillant à l'intérieur de l'enveloppe du pressuriseur.

Le plancher peut être également constitué par une structure légère introduite à l'état replié dans l'enveloppe du pressuriseur et manoeuvrée après son introduction dans l'enveloppe pour être mise dans un état déplié ou déployé où cette structure recouvre les barres d'appui 32 des bras 15, de manière à occuper une partie substantielle ou la totalité de la section droite de l'enveloppe 2 du pressuriseur 1.

Cette manoeuvre d'une structure légère pour réaliser son déploiement à l'intérieur de l'enveloppe du pressuriseur peut être commandée à distance depuis l'extérieur du pressuriseur ou effectuée par un opérateur travaillant à l'intérieur du pressuriseur.

Dans le cas d'un plancher de travail constitué par des éléments 17 juxtaposés et assemblés, les éléments situés à la partie centrale du plancher sont généralement en forme de trapèzes et sont reliés à leur partie externe à des éléments complémentaires 35 en forme de secteurs circulaires dont le bord externe en forme de portion de cercle est destiné à venir en contact ou au voisinage de la surface interne de l'enveloppe cylindrique 2 du pressuriseur 1.

Sur ces éléments externes 35 peuvent être montés des éléments réglables 36 en forme de secteurs circulaires reliés aux éléments 35 par des pions engagés dans les fentes 37 de direction radiale ménagées dans les éléments 35.

Sur la figure 3, on a représenté un élément 36 dont le déplacement radial par rapport à l'élément 35 correspondant permet de régler la position du bord extérieur 38 de forme circulaire, de manière que ce bord vienne en contact avec la surface interne d'une enveloppe de pressuriseur 2.

Les éléments 36 permettent de réaliser un plancher continu à sa partie périphérique venant en contact avec la surface interne de l'enveloppe du pressuriseur.

Le plancher obtenu occupe ainsi toute la section droite de l'enveloppe 2 et permet d'éviter toute chute d'objet ou d'outil dans la partie inférieure du pressuriseur, pendant les interventions effectuées en utilisant le plancher de travail.

En outre, les bras 15 comportent à leur partie d'extrémité extérieure opposée à leur palier d'articulation 33, une tige 40 montée coulissante dans la structure du bras et percée d'ouvertures susceptibles de venir en coïncidence avec les ouvertures du bras 15 correspondant pour l'engagement de goupilles 42 permettant de fixer l'extension radiale du bras réalisé sous forme télescopique. L'extrémité de la tige 40 est solidaire d'une tête 41 venant en contact avec la paroi interne de l'enveloppe 2 du pressuriseur lorsque les bras sont mis en service dans leur position déployée.

Le montage télescopique de l'extrémité du bras et les éléments 36 réglables dans la direction radiale permettent d'adapter le plancher de travail au diamètre intérieur de l'enveloppe du pressuriseur, dans un intervalle de réglage d'une certaine amplitude.

La mise en place du plancher amovible suivant l'invention à l'intérieur de l'enveloppe d'un pressuriseur peut donc être effectuée entièrement ou en grande partie par des opérations effectuées depuis l'extérieur de l'enveloppe du pressuriseur.

Dans un premier temps, la goulotte 14 dans laquelle l'ensemble des bras 15 est placé dans sa position de repli 30 est amenée, par un moyen de manutention et de levage dans une position permettant son introduction dans un trou d'homme 8 traversant le fond supérieur bombé du pressuriseur.

L'élément d'accrochage 18 est prévu de manière que l'inclinaison de la goulotte à l'état libre à l'extrémité du crochet du moyen de levage corresponde sensiblement à l'inclinaison de l'axe 21 du trou d'homme.

L'introduction de la goulotte dans l'enveloppe du pressuriseur est assurée grâce au moyen de manutention et de levage, de manière que la virole 14a vienne s'engager dans le trou d'homme et que la bride 19 vienne en appui sur la partie extérieure de la tubulure 10.

On réalise alors la fixation par vissage de la bride 19 sur la tubulure 10 puis la mise en position de service des bras 15 par basculement de l'arbre de support 16, de manière que son axe 29 vienne dans une position verticale confondue avec l'axe de l'enveloppe du pressuriseur.

Les bras 15 sont alors placés dans leur position déployée, à 60° les uns des autres.

Enfin, le plancher de travail est posé ou déployé sur les barres d'appui 32 des bras supports 15, dans leur position de service.

L'ensemble de ces opérations peut être réalisé très rapidement et avec une intervention réduite ou même sans intervention d'un opérateur à l'intérieur de l'enveloppe du pressuriseur.

Lorsque la structure est en place, le réglage des éléments plans périphériques du plancher de travail permet d'obtenir un plancher continu ne comportant pas de discontinuité ou d'ouvertures par lesquelles des objets tels que des outils pourraient tomber dans la partie inférieure du pressuriseur, pendant l'intervention réalisée en utilisant le plancher amovible suivant l'invention.

En outre, pendant le montage lui-même, les risques de chute d'éléments constituant le plancher amovible dans le pressuriseur sont pratiquement nuls, les éléments constituant la structure de support de ce plancher étant préassemblés.

Le dispositif présente une bonne rigidité et, dans le cas d'un pressuriseur d'un réacteur nucléaire de type courant, ce plancher a pu être réalisé de manière qu'il supporte des charges supérieures à 400 kg.

La mise en place et l'utilisation d'un plancher amovible suivant l'invention permettent donc en particulier de réduire au minimum les doses de rayonnements ionisants reçues par les opérateurs chargés du montage du plancher et de l'intervention dans le pressuriseur.

Il est bien évident que l'invention ne se limite pas au mode de réalisation qui a été décrit.

C'est ainsi que les bras supports peuvent présenter une structure différente de celle qui a été décrite et que ces bras peuvent être montés sur l'arbre support en utilisant des moyens d'articulation différents de ceux qui ont été décrits.

La goulotte peut présenter une forme différente de celle qui a été décrite, à partir du moment où cette goulotte présente une rigidité suffisante pour supporter le plancher amovible et les charges venant reposer sur ce plancher pendant l'intervention à l'intérieur du pressuriseur.

Il est bien évident également que le plancher de travail peut être réalisé d'une manière différente de celle qui a été décrite, soit à partir d'éléments plans rapportés, soit à partir d'une structure légère qui peut être dépliée, déployée ou déroulée à l'intérieur du pressuriseur.

Les moyens de commande assurant la mise en position de service des bras supports peuvent être d'un type quelconque, ces moyens étant de préférence commandés à distance.

On peut imaginer des structures de support comportant un nombre de bras différent de six, ces bras étant placés en position de service dans des positions angulaires qui peuvent être régulièrement réparties autour de l'axe de l'enveloppe.

Enfin, le plancher amovible d'intervention suivant l'invention peut être utilisé non seulement pour effectuer des interventions à l'intérieur de l'enveloppe d'un pressuriseur de réacteur nucléaire à eau sous pression et dans sa partie supérieure mais également à l'intérieur d'une enveloppe cylindrique à axe vertical utilisée dans une partie quelconque d'un réacteur nucléaire ou même à l'intérieur d'enveloppes cylindriques à axe vertical utilisée dans toute industrie telle que l'industrie chimique, l'industrie pétrolière ou la métallurgie.

## Revendications

1. Plancher amovible d'intervention à l'intérieur d'une enveloppe telle que l'enveloppe (2) d'un pressuriseur (1) d'un réacteur nucléaire à eau sous pression, de forme générale cylindrique, disposée avec son axe vertical et fermée, à son extrémité supérieure, par un fond bombé (6) traversé par au moins une ouverture de visite (8), le plancher d'intervention (12) pouvant être mis en place dans l'enveloppe (2) et démonté et extrait par des opérations effectuées depuis l'extérieur de l'enveloppe (2), caractérisé par le fait qu'il comporte :
- une goulotte (14) comportant un ensemble de manutention et de fixation à l'une de ses extrémités constitué par un élément d'accrochage (18) à un moyen de levage (24), une virole cylindrique (14a) et une bride (19), pour son engagement dans l'ouverture de visite (18) de l'enveloppe et sa fixation par vissage de la bride (19) sur une partie externe (10) de l'enveloppe (2) ainsi qu'une partie de support (14b) en forme de portion de cylindre ouverte latéralement et prolongeant la virole (14a) sensiblement dans sa direction axiale,
- un arbre de support (16) monté articulé à l'extrémité de la goulotte (14) opposée à son extrémité comportant l'ensemble de manutention et de fixation, cette extrémité se trouvant au voisinage de l'axe (20) de l'enveloppe (2), lorsque la goulotte (14) est mise en place dans l'enveloppe (2), l'axe d'articulation (22) de l'arbre de support (16) étant alors dans une position horizontale, de manière que cet arbre (16) puisse pivoter entre une position de repli sensiblement perpendiculaire à la direction longitudinale de la goulotte (14) et une position de service où l'arbre (16) est sensiblement coaxial à l'enveloppe (2),
- un ensemble de bras supports (15) montés sur l'arbre de support (16) de manière pivotante entre une position de repli où les bras supports (15) sont sensiblement parallèles les uns par rapport aux autres et accolés, les bras (15) pouvant alors être placés et maintenus dans la goulotte (14) suivant sa direction axiale, l'arbre de support (16) étant dans sa position de repli, et une position déployée dans laquelle les bras (15) peuvent être placés par pivotement autour de l'axe (29) de l'arbre support (16) en position verticale, dans des dispositions angulaires (15a, 15b, ... 15f) réparties de manière sensiblement régulière autour de l'axe (20) de l'enveloppe (2),
- et une pluralité d'éléments plans (17, 35) destinés à reposer sur les bras supports (15) en position déployée pour constituer un plancher de travail sensiblement dans toute la section droite de l'enveloppe (2).

2. Plancher amovible suivant la revendication 1, caractérisé par le fait que les bras (15) présentent une structure entretoisée comportant une barre supérieure d'appui (32) sur laquelle viennent reposer les éléments plans (17) du plancher et au moins un palier d'articulation (33) relié à la structure réticulée par un élément de liaison coudé, chacun des bras de l'ensemble de bras (15) présentant une forme différente des autres bras, en ce qui concerne la position du palier d'articulation (33) dans la direction axiale de l'arbre support (16), par rapport à la barre d'appui (32), de manière que les bras (15a, 15b, ..., 15f) puissent être montés articulés sur l'arbre de support (16), avec leurs paliers (33) en position superposée dans la direction axiale (29) de l'arbre de support (16), les barres d'appui (32) ayant des surfaces d'appui toutes situées dans le même plan, de manière que ces surfaces d'appui des barres (32) soient dans un même plan horizontal de section droite de l'enveloppe (2), lorsque les bras (15) sont dans leur position déployée.

3. Plancher amovible suivant la revendication 2, caractérisé par le fait que chacun des bras (15) comporte deux paliers d'articulation (33) dans des positions superposées dans la direction de l'axe (29) de l'arbre de support (16).

4. Plancher amovible suivant l'une quelconque des revendications 1 à 3, caractérisé par le fait que chacun des bras (15) comporte une extrémité télescopique (40, 41, 42), de manière à régler la longueur du bras support (15) en fonction du diamètre intérieur de l'enveloppe (2).

5. Plancher amovible suivant l'une quelconque des revendications 1 à 4, caractérisé par le fait que les éléments plans (17) comportent des éléments centraux en forme de trapèze et des éléments périphériques en forme de secteurs circulaires dont le bord externe en forme d'arc-de-cercle est destiné à venir en contact ou au voisinage de la surface intérieure de l'enveloppe (2).

6. Plancher amovible suivant la revendication 5, caractérisé par le fait que les éléments périphériques (35) portent des éléments (36) en forme de secteurs circulaires, dont la position est réglable dans les directions radiales de l'enveloppe (2) de manière à adapter la dimension du plancher amovible à la dimension de la section droite de l'enveloppe (2) et à éviter la présence d'ouvertures ou d'interstices à la périphérie du plancher, entre le bord externe de ce plancher et la paroi interne de l'enveloppe (2).

7. Plancher amovible suivant l'une quelconque des revendications 1 à 6, caractérisé par le fait qu'il comporte six bras supports (15a, 15b, 15c, 15d, 15e, 15f) qui sont placés en position déployée, dans des dispositions angulaires à 60° les unes des autres autour de l'axe (20) de l'enveloppe (2).

8. Plancher amovible suivant la revendication 1, caractérisé par le fait que les éléments plans (17, 35) constituent un ensemble préassemblé qui peut être introduit à l'état replié dans l'enveloppe (2) et déplié ou déployé à l'intérieur de l'enveloppe, sur la structure de support constituée par les bras (15) en position déployée.

## Patentansprüche

1. Entfernbares Gerüst zum Zugang in das Innere einer Hülle, wie der im wesentlichen zylindrischen Hülle (2) eines Druckbehälters (1) eines Druckwasserkernreaktors, die mit ihrer Achse vertikal angeordnet und an ihrem oberen Ende durch eine gewölbte Decke (6) geschlossen ist, durch die sich wenigstens eine Einstiegsöffnung (8) erstreckt, wobei das Zugangsgerüst (12) durch Operationen von außerhalb der Hülle (2) in der Hülle (2) angeordnet, demontiert und herausgezogen werden kann, dadurch gekennzeicnnet, daß das Gerüst aufweist:
- eine Rutsche (14), an deren einem Ende eine Wartungs- und Befestigungseinheit vorgesehen ist, die durch ein Element (18) zum Verbinden mit einer Hebeeinrichtung (24), einen zylindrischen Ring (14a) und einen Flansch (19) zu seinem Eingreifen in die Einstiegsöffnung (18) der Hülle und zur Befestigung durch Verschrauben des Flanschs (19) an einem Außenteil (10) der Hülle (2) sowie durch ein Stützteil (14b) in Form eines seitlich offenen und den Ring im wesentlichen in dessen Achsrichtung verlängernden Zylinders gebildet ist,
- eine Stützwelle (16), die gelenkig an dem dem die Wartungs- und Befestigungseinheit aufweisenden Ende gegenüberliegenden Ende der Rutsche (14) montiert ist, wobei dieses Ende sich in der Nähe der Achse (20) der Hülle (2) befindet, wenn die Rutsche (14) in der Hülle (2) plaziert ist, wobei sich die Schwenkachse (22) der Stützwelle (16) dann derart in einer horizontalen Position befindet, daß diese Welle (16) zwischen einer zur Längsrichtung der Rutsche (14) im wesentlichen senkrechten Klapposition und einer Gebrauchsposition, in der die Welle (16) im wesentlichen koaxial zu der Hülle (2) verläuft, schwenkbar ist,
- eine Gruppe von Stützarmen (15), die an der Stützwelle (16) zwischen einer Klapposition, in der die Stützarme im wesentlichen zueinander parallel verlaufen und fest sind, wodurch die Arme (15) entlang der Achsrichtung in der Rutsche (14) angeordnet und gehalten werden können, während sich die Stützwelle (16) in ihrer Klapposition befindet, und einer ausgefahrenen Position verschwenkbar sind, in der die Arme (15) durch Schwenken um die Achse (29) der Stützwelle (16) in die vertikale Position in im wesentlichen regelmäßig um die Achse (20) der Hülle (2) verteilte Winkelpositionen (15a, 15b, ..., 15f) schwenkbar sind,
- und mehrere ebene Elemente (17, 35), die in der ausgefahrenen Position zum Aufliegen auf den Stützarmen (15) vorgesehen sind, um im wesentlichen über den gesamten Querschnitt der Hülle (2) ein Arbeitsgerüst zu bilden.

2. Entfernbares Gerüst nach Anspruch 1, dadurch gekennzeichnet, daß die Arme (15) eine Strebenstruktur aus einer oberen Auflagestrebe (32), auf der die ebenen Elemente (17) des Gerüsts liegen, und wenigstens einem Schwenklager (33) bilden, das durch ein abgewinkeltes Verbindungselement mit der Strebenstruktur verbunden ist, wobei jeder Arm der Gruppe von Armen (15), hinsichtlich der Position des Schwenklagers (33) in Achsrichtung der Stützwelle (16) in bezug auf die Auflagestrebe (32), eine von den anderen Armen verschiedene Form aufweist, derart, daß die Arme (15a, 15b, ..., 15f) mit in Achsrichtung (29) der Stützwelle übereinanderliegenden Lagern (33) gelenkig an der Stützwelle (16) montierbar sind, wobei sämtliche Auflageflächen der Auflagestreben (32) derart in der selben Ebene liegen, daß sich die Auflageflächen der Streben (32) in der ausgefahrenen Position der Arme (15) in der selben horizontalen Querschnittsebene der Hülle (2) befinden.

3. Entfernbares Gerüst nach Anspruch 2, dadurch gekennzeichnet, daß jeder der Arme (15) zwei in Richtung der Achse (29) der Stützwelle (16) übereinanderliegende Schwenklager (33) aufweist.

4. Entfernbares Gerüst nach einem der Ansprüche 1 bis 3, dadurch gekennzeichnet, daß jeder der Arme (15) ein teleskopierbares Ende (40, 41, 42) zum Einstellen der Länge der Stützarme (15) in Abhängigkeit vom Durchmesser der Hülle (2) aufweist.

5. Entfernbares Gerüst nach einem der Ansprüche 1 bis 4, dadurch gekennzeichnet, daß die ebenen Elemente (17) trapezförmige mittlere Elemente und sektorförmige Umfangselemente aufweisen, deren kreisbogenförmiger Außenrand dazu vorgesehen ist, in Anlage an oder in die Nähe der Innenfläche der Hülle (2) zu gelangen.

6. Entfernbares Gerüst nach Anspruch 5, dadurch gekennzeichnet, daß die Umfangselemente (35) sektorförmige Elemente (36) tragen, deren Position in Radialrichtung der Hülle (2) einstellbar ist, um die Abmessung des entfernbaren Gerüsts der Abmessung des Querschnitts der Hülle (2) anzupassen und um das Vorhandensein von Öffnungen oder Abständen am Umfang des Gerüsts zwischen dem Außenrand des Gerüsts und der Innenwand der Hülle (2) zu vermeiden.

7. Entfernbares Gerüst nach einem der Ansprüche 1 bis 6, dadurch gekennzeichnet, daß es sechs Stützarme (15a, 15b, 15c, 15d, 15e, 15f) aufweist, die in der ausgefahrenen Position in Winkelabständen von 60° voneinander um die Achse (20) der Hülle (2) angeordnet sind.

8. Entfernbares Gerüst nach Anspruch 1, dadurch gekennzeichnet, daß die ebenen Elemente (17, 35) eine vormontierte Einheit bilden, die im zusammengeklappten Zustand in die Hülle (2) eingeführt und im Inneren der Hülle auf die durch die in der ausgefahrenen Position befindlichen Arme (15) gebildete Stützstruktur aufgeklappt oder ausgefahren werden kann.

## Claims

1. Removable platform for working inside a casing, such as the casing (2) of a pressuriser (1) of a pressurised-water nuclear reactor, cylindrical in shape overall, disposed with its axis vertical and closed at its upper end by a domed end (6) with at least one inspection port (8) in it, the working platform (12) being capable of being installed in the casing (2) and dismounted and extracted by means of operations conducted from outside the casing (2), characterised in that it comprises:
- a chute (14) having a handling and fixing assembly at one of its ends, consisting of a member (18) for hooking onto a lifting means (24), a cylindrical tube (14a) and a flange (19) for engaging it in the inspection port (18) in the casing and fixing it by the screwing of the flange (19) to an external part (10) of the casing (2), and a supporting part (14b) in the form of a portion of a cylinder open laterally and extending the tube (14a) substantially in its axial direction,
- a supporting shaft (16) mounted in an articulated manner at that end of the chute (14) which is opposite the end having the handling and fixing assembly, this end being located in the vicinity of the axis (20) of the casing (2) when the chute (14) is installed in the casing (2), the axis of articulation (22) of the supporting shaft (16) being then in a horizontal position, so that this shaft (16) can pivot between a folded-up position substantially perpendicular to the longitudinal direction of the chute (14) and an operating position in which the shaft (16) is substantially coaxial with the casing (2),
- an assembly of supporting arms (15) mounted on the supporting shaft (16) pivotably between a folded-up position, in which the supporting arms (15) are substantially parallel to and laid against one another, the arms (15) then being capable of being placed and maintained in the chute (14) in its axial direction, the supporting shaft (16) being in its folded-up position, and an unfolded position in which the arms (15), by pivoting about the axis (29) of the supporting shaft (16) in the vertical position, can be placed in angular arrangements (15a, 15b, ... 15f) distributed substantially uniformly about the axis (20) of the casing (2),
- and a plurality of plane members (17, 35) intended to rest on the supporting arms (15) in the unfolded position, to form a working platform substantially over the entire cross section of the casing (2).

2. Removable platform according to Claim 1, characterised in that the arms (15) have a braced structure comprising an upper bearing bar (32), on which the plane members (17) of the platform come to rest, and at least one pivot bearing (33) connected to the reticular structure by means of an angled connecting member, each of the arms in the set of arms (15) having a shape different from that of the other arms as regards the position of the pivot bearing (33) in the axial direction of the supporting shaft (16) in relation to the bearing bar (32), so that the arms (15a, 15b, ... 15f) can be mounted in an articulated manner on the supporting shaft (16), with their bearings (33) in a position placed one above the other in the axial direction (29) of the supporting shaft (16), the bearing bars (32) having bearing surfaces all situated in the same plane, so that these bearing surfaces of the bars (32) are in the same horizontal cross-sectional plane of the casing (2) when the arms (15) are in their unfolded position.

3. Removable platform according to claim 2, characterised in that each of the arms (15) comprises two pivot bearings (33) in positions placed one above the other in the direction of the axis (29) of the supporting shaft (16).

4. Removable platform according to any one of claims 1 to 3, characterised in that each of the arms (15) has a telescopic end (40, 41, 42), so as to adjust the length of the supporting arm (15) as a function of the inside diameter of the casing (2).

5. Removable platform according to any one of Claims 1 to 4, characterised in that the plane members (17) include central members of trapezoidal shape and peripheral members in the form of sectors of a circle, the outer edge of which, in the form of an arc of a circle, is intended to come into contact with or into the vicinity of the internal surface of the casing (2).

6. Removable platform according to claim 5, characterised in that the peripheral members (35) carry members (36) in the form of sectors of a circle, the position of which is adjustable in the radial directions of the casing (2), so as to match the dimensions of the removable platform to the cross-sectional dimension of the casing (2) and avoid the presence of openings or gaps on the periphery of the platform between the outer edge of this platform and the internal wall of the casing (2).

7. Removable platform according to any one of claims 1 to 6, characterised in that it comprises six supporting arms (15a, 15b, 15c, 15d, 15c, 15f) which, in the unfolded position, are placed in angular arrangements at 60°C relative to one another about the axis (20) of the casing (2).

8. Removable platform according to claim 1, characterised in that the plane members (17, 35) form a preassembled assembly which can be introduced in the folded state into the casing (2) and unfolded or opened out inside the casing, on the supporting structure consisting of the arms (15) in the opened-out position.
